# EUROPÄISCHE PATENTSCHRIFT

(11) **EP 3 541 768 B1**
(45) Veröffentlichungstag und Bekanntmachung des Hinweises auf die Patenterteilung: **17.06.2020**
(21) Anmeldenummer: 17767758.0
(22) Anmeldetag: 01.09.2017
(51) Int. Cl.: C05F 17/90, C05F 17/964, C05F 17/943, C05F 17/921

(54) **AEROBES VERFAHREN UND VORRICHTUNG ZUM BEHANDELN VON ORGANIKHALTIGEM MATERIAL**
AEROBIC METHOD AND DEVICE FOR TREATING ORGANIC MATERIAL
PROCÉDÉ AÉROBIE ET DISPOSITIF POUR LE TRAITEMENT D'UN MATÉRIAU CONTENANT DES SUBSTANCES ORGANIQUES

(43) Veröffentlichungstag der Anmeldung: 25.09.2019
(73) Patentinhaber: Kompoferm GmbH, 33428 Marienfeld (DE)
(72) Erfinder: EGGERSMANN, Karlgünter, 33428 Marienfeld (DE)
(74) Vertreter: Schober, Mirko
(86) Internationale Anmeldenummer: PCT/EP2017/072028
(87) Internationale Veröffentlichungsnummer: WO 2019/042569

(56) Entgegenhaltungen:
- WO-A1-2016/174513
- US-A- 5 204 263
- US-A1- 2008 064 087
- US-A1- 2009 029 448

## Beschreibung

### TECHNISCHES GEBIET

Die Erfindung betrifft ein aerobes Verfahren zum Behandeln von organikhaltigem Material nach dem Oberbegriff des Anspruchs 1 sowie eine entsprechende Vorrichtung nach Anspruch 7.

### STAND DER TECHNIK

Bei gattungsgemäßen Verfahren wird in der Regel organikhaltiges Material in eine Behandlungszeile verbracht (üblicherweise mit einem Radlader) und dort unter Luftzufuhr getrocknet oder kompostiert. Unter organikhaltigem Material wird ein Material verstanden, welches zumindest organisches Material aufweist, aber auch nicht organisches Material enthalten kann.

US 2009/029448 A1 offenbart ein länglich aufgeschüttetes Haufwerk zur aeroben Verrottung, das mit einer semipermeablen Folie abgedeckt ist. Diese Folien lassen Gase und Wasserdampf passieren, halten aber Gerüche und Wasser zurück. Die Folie wird mit einer über dem Haufwerk angeordneten Maschine, die in Längsrichtung über dem Haufwerk verfahrbar ist, auf das Haufwerk abgelegt und bei Bedarf wieder aufgenommen. Das Aufschichten des Haufwerks und dessen Abtragen finden offen statt, was weiterhin zu Geruchsbelästigungen führt.

WO 2016/174513 A1 offenbart ein Verfahren und eine Vorrichtung zum Trocknen von Hausmüll, bei dem dieser belüftet wird und die einsetzende aerobe Verrottung Wärme freisetzt, die einen Trocknungsprozess unterstützt. Diese Trocknung findet in Mieten oder Hallen statt, die von semipermeablen Folien abgedeckt sind. Hierbei finden das Aufschichten und das Austragen unter der Folie statt. Zwar wird die Geruchsbelästigung des Umfeldes dadurch verringert, doch ist die Atmosphäre unter der Abdeckung für die dann dort arbeitenden Menschen lästig bis gesundheitsschädlich. Bei derartigen Verrottungsprozessen ist es oft erforderlich, das Material gelegentlich umzuschichten oder umzusetzen, damit eine Materialdurchmischung stattfindet, Klumpen aufgebrochen werden und insgesamt das Material homogenisiert wird. Bei diesem Vorgang liegt das Material frei, d.h. über die gesamte Länge der Behandlungszeile kann ein Austausch mit der Luft erfolgen. Dabei kommt es zu nicht unerheblichen Geruchsbeeinträchtigungen, die für die nähere Umgebung solcher Behandlungsanlagen als unangenehm und störend empfunden werden. Da solche Umsetzvorgänge in der Regel mit Radladern durchgeführt werden und entsprechende Behandlungszeilen üblicherweise über eine gewisse Länge verfügen (einige 10m), dauert der Umsetzvorgang von einer Behandlungszeile in eine andere Behandlungszeile üblicherweise einige Stunden. Während dieser Zeit liegt das organikhaltige Material frei, d.h. ein ständiger Austausch von Gerüchen mit der Umgebungsluft (und damit eine starke Geruchsbelastung) ist während dieser Zeit nicht zu verhindern.

US 5204263 A offenbart einen Verrottungskanal, der oben von einer segmenttorähnlichen Abdeckung verschlossen werden kann. Auf den Seitenwänden des Verrottungskanals kann ein Umsetzer das gelagerte Material umsetzen und dabei durchmischen. Zum Umsetzen schiebt der Umsetzer die Abdeckung vor sich her, so dass der überfahrene Bereich offen liegt. Beim Zurückfahren des Umsetzers zieht er die Abdeckung wieder über den Verrottungskanal. Zwar reduzieren sich bei diesem Verfahren die Öffnungszeit und die Öffnungsgröße des Verrottungskanals beim Umsetzen des Inhalts, doch gerade in dem Bereich der Umsetzung, bei dem viele Geruchsstoffe aufgewirbelt werden, ist der Verrottungskanal zumindest teilweise offen.

### DIE ERFINDUNG

Aufgabe der vorliegenden Erfindung ist es daher, ein verbessertes Verfahren und eine Vorrichtung der eingangs genannten Art anzugeben, bei denen die Geruchsbelastung, d.h. die Emission von Gerüchen aus dem Prozess oder infolge des Umsetzens des Materials, deutlich reduziert wird.

Gelöst wird diese Aufgabe durch ein Verfahren mit den Merkmalen des Anspruchs 1 sowie eine Vorrichtung mit den Merkmalen des Anspruchs 7. Vorteilhafte Ausführungsformen finden sich in den jeweiligen abhängigen Ansprüchen.

Ein erfindungsgemäßes aerobes Verfahren zum Behandeln von organikhaltigem Material umfasst beispielsweise folgende Schritte:
a. Beschicken einer Behandlungszeile mit zu behandelndem organikhaltigen Material;
b. Abdecken des zu behandelnden organikhaltigen Materials mit einer feuchtigkeits- und/oder luftdurchlässigen aber zumindest Geruchsemissionen reduzierenden ersten Membran;
c. aerobes Behandeln des organikhaltigen Materials durch aktives Zuführen von Luft in das organikhaltige Material und Durchströmen desselben mit der zugeführten Luft;
d. Umsetzen des organikhaltigen Materials mittels einer Umsetzvorrichtung, wobei das organikhaltige Material homogenisiert und/oder durchmischt wird, wobei ggf. das aktive Zuführen von Luft in das organikhaltige Material während des Umsetzvorgangs unterbrochen und/oder reduziert wird.
e. Fortsetzen des Zuführens von Luft gemäß Schritt c.

Zum Umsetzen wird dabei eine Umsetzvorrichtung eingesetzt, welche entlang der Längserstreckungsrichtung der Behandlungszeile bewegt wird. Während dieses Vorganges setzt die Umsetzvorrichtung das organikhaltige Material mittels einer Umsetzwalze um. Die Umsetzvorrichtung weist eine Membranaufnahmeeinrichtung auf, die die das organikhaltige Material abdeckende erste Membran während des Umsetzens aufnimmt. Weiter weist die Umsetzvorrichtung eine Membranablegeeinrichtung auf, die eine feuchtigkeits- und/oder luftdurchlässige aber zumindest Geruchsemissionen reduzierende zweite Membran auf dem umgesetzten organikhaltigen Material ablegt.

Der Kerngedanke der vorliegenden Erfindung besteht darin, anstelle eines Radladers einen Umsetzer mit einer Umsetzwalze zu verwenden, welcher nicht nur in der Lage ist, gegenüber einem Radlader in verhältnismäßig kurzer Zeit das gesamte Material einer Behandlungszeile umzusetzen, sondern zudem mit einer Membranaufnahmevorrichtung und einer Membranablegeeinrichtung ausgestattet ist. Auf diese Weise kann das zu behandelnde organikhaltige Material nämlich auch während des Umsetzvorgangs nach außen geruchshemmmend abgedeckt sein, so dass Geruchsemissionen auch während des Umsetzvorgangs reduziert bzw. verhindert werden. Im Prozess wird eine bereits auf dem organikhaltigen Material befindliche Membran durch die Membranaufnahmevorrichtung abgehoben, eine entsprechende weitere Membran aber mittels einer Membranablegeeinrichtung sogleich wieder auf dem organikhaltigen Material platziert. Auf diese Weise findet der Umsetzprozess weitgehend unter einer Geruchsemissionen reduzierenden Membran statt, so dass das Freisetzen von hohen Geruchsemissionen auf einen schmalen Bereich hinter dem Umsetzer begrenzt ist.

Nach einer bevorzugten Ausführungsform ist vorgesehen, dass die erste Membran durch die an der Umsetzvorrichtung an der in Bewegungsrichtung vorauseilenden Seite angeordnete Membranaufnahmeeinrichtung während des Umsetzens aufgewickelt wird. Durch das Aufwickeln lässt sich die Membran besonders einfach beim Vorschub der Umsetzvorrichtung vom organikhaltigen Material abheben.

Entsprechend kann nach einer weiteren Ausführungsform der vorliegende Erfindung alternativ oder ergänzend vorgesehen sein, dass die zweite Membran durch die an der Umsetzvorrichtung an der in Bewegungsrichtung nachlaufenden Seite angeordnete Membranablegeeinrichtung während des Umsetzens abgewickelt wird. Auf diese Weise ist es ebenso einfach wie bei der Aufnahme der Membran möglich, eine entsprechende weitere Membran von gleichem oder anderem Aufbau wieder auf dem organikhaltigen Material abzulegen, während der Umsetzvorgang läuft.

Das erfindungsgemäße Verfahren kann bevorzugt ein Verfahren sein, bei welchem das organikhaltige Material aerob getrocknet und/oder kompostiert wird, hygienisiert und/oder aerobisiert und/oder Stoffe, insbesondere Schadstoffe, mikrobiologisch umgewandelt und/oder abgebaut werden.

Nach einer weiteren erfindungsgemäßen Variante des Verfahrens kann vorgesehen sein, dass bereits während des Schrittes b. ein Umsetzen des organikhaltigen Materials mittels der Umsetzvorrichtung ausgeführt wird. Auf diese Weise wird das organikhaltige Material, welches in der Regel bei der Beschickung der Behandlungszeile im Extremfall stark inhomogen vorliegt, vor Start des Behandlungsprozesses bereits einmal durch Umsetzen homogenisiert wird. Dies kann den Behandlungsprozess insgesamt optimieren bzw. beschleunigen.

Als weitere Variante kann alternativ oder ergänzend hierzu vorgesehen sein, dass nach Beendigung des aeroben Behandlungsvorgangs ein weiteres Umsetzen des organikhaltigen Materials mittels der Umsetzvorrichtung erfolgt. Hierbei wird die auf dem organikhaltigen Material liegende Membran von der Mem-branaufnahmeeinrichtung aufgenommen. Das fertig behandelte Material wird auf diese Weise noch einmal homogenisiert und für den Abtransport vorbereitet, wobei die Abdeckung (Membran) gleichzeitig entfernt wird, so dass der Abtransport des Materials umgehend erfolgen kann.

Die Erfindung betrifft - wie eingangs erwähnt - auch eine Vorrichtung zur Durchführung des oben genannten Verfahrens.

Die Vorrichtung weist dazu folgendes auf: Wenigstens eine Umsetzvorrichtung mit einer Umsetzwalze und einer Membranaufnahmeeinrichtung an einer ersten Seite der Umsetzvorrichtung und einer Membranablegeeinrichtung an einer der ersten Seite gegenüberliegenden zweiten Seite der Umsetzvorrichtung, welche eine feuchtigkeits- und/oder luftdurchlässige aber zumindest Geruchsemissionen reduzierende zweite Membran und/oder erste Membran aufweist. Gegenüber einem Radlader hat diese Umsetzvorrichtung den Vorteil, dass die Umsetzwalze, welche innerhalb der Behandlungszeile in einer Bewegungsrichtung des Umsetzers entlang der Haupt-Längserstreckungsrichtung der Behandlungszeile entlang geführt wird, so strukturiert werden kann, dass sie am Rand befindliches Material zur Mitte wirft, so dass während des Umsetzvorgangs bereits eine gute Durchmischung des organikhaltigen Materials stattfindet.

Bevorzugt ist dabei vorgesehen, dass die erfindungsgemäße Vorrichtung wenigstens eine Behandlungszeile mit einem Ablageboden zum Ablegen von organikhaltigem Material umfasst, wobei die Behandlungszeile weiter eine, bevorzugt im Ablageboden angeordnete, Belüftungseinrichtung umfasst, die auf dem Ablageboden abgelegtes organikhaltiges Material belüften kann. Mit dieser Vorrichtung lässt sich auch das organikhaltige Material aerob behandeln, wobei die Belüftungseinrichtung in der Lage ist, das organikhaltige Material von unten mit Luft zu durchströmen. Die Belüftungseinrichtung kann zudem so ausgebildet sein, dass sie Flüssigkeiten, die in der Behandlungszeile entstehen oder freiwerden erfassen und ableiten kann.

Vorteilhafterweise ist vorgesehen, dass die Behandlungszeile wenigstens zwei beabstandete, sich in der Hauptlängserstreckung der Behandlungszeile erstreckende Seitenwände aufweist. Die Seitenwände haben zum einen den Vorteil, dass das organikhaltige Material während des Umsetzvorgangs sicher innerhalb der Behandlungszeile gehalten wird, zum anderen kann die Membran über die Seitenwände gelegt und ggf. an den Seitenwänden befestigt werden, was ein wesentlich besseres Abdichten der gesamten Vorrichtung nach außen bewirkt. Damit lässt sich insbesondere auch nicht stapelfähiges Material behandeln. Eine erfindungsgemäße Vorrichtung kann natürlich eine Mehrzahl Behandlungszeilen aufweisen, die ihrerseits wiederum entsprechende Seitenwände aufweisen können.

Bevorzugt kann jedenfalls bei einer Behandlungszeile mit Seitenwänden vorgesehen sein, dass sich die Umsetzwalze der Umsetzvorrichtung über die gesamte Breite der Behandlungszeile zwischen den Seitenwänden erstreckt. Die Umsetzwalze kann somit den gesamten Innenraum der Behandlungszeile umsetzen, ohne von einem Fahrwerk oder dergleichen beeinträchtigt zu werden. Bevorzugt ist nach einer besonderen Ausführungsform der vorliegende Erfindung nämlich vorgesehen, dass die Umsetzvorrichtung ein Fahrwerk aufweist, welches die Umsetzvorrichtung in einer Bewegungsrichtung parallel zu den Seitenwänden bewegen kann und welches an den jeweiligen Außenseiten der Seitenwände, insbesondere benachbart zu den Außenseiten, angeordnet ist. Dabei ist das Fahrwerk nicht mit der Außenseite der Seitenwände verbunden und wir nur vom Boden getragen.

Zum Umsetzen ist in der Regel vorgesehen, dass die Umsetzvorrichtung in einer Bewegungsrichtung bzw. Arbeitsrichtung durch die Behandlungszeile geführt wird. Die Umsetzvorrichtung kann aber auch so ausgebildet sein, dass sie, ohne die Vorrichtung um 180° wenden zu müssen, bidirektional durch eine Behandlungszeile geführt werden kann. Dies hat zum einen den Vorteil, dass die Umsetzvorrichtung zwei Arbeitsrichtungen aufweist und nicht aufwändig gewendet werden muss. Zum anderen kann bei Anlagen mit einer Mehrzahl Behandlungszeilen die Umsetzvorrichtung nach erfolgtem Umsetzen aus einer Behandlungszeile herausgefahren und in die nächste benachbarte Behandlungszeile wieder hereingefahren werden, wobei das Umsetzen dort dann in der entsprechend entgegengesetzten Richtung erfolgt.

Folglich ist nach einer besonderen Ausführungsform der erfindungsgemäßen Vorrichtung vorgesehen, dass sie zwei in Bewegungsrichtung hintereinander angeordnete Umsetzwalzen mit entgegengesetzten Drehrichtungen aufweist. Die beiden Umsetzwalzen können abgesenkt und hochgefahren werden. Dies kann beispielsweise dadurch erfolgen, dass beide Umsetzwalzen an einer Schwinge gelagert sind, die über einen Drehantrieb betätigt werden kann. Andere Möglichkeiten sind, dass die Halterungen der Umsetzwalzen über entsprechende Linearantriebe gegenüber der Umsetzvorrichtung in vertikaler Richtung verfahrbar sind.

Für den bidirektionalen Betrieb kann insbesondere auch vorgesehen sein, dass die Umsetzvorrichtung eine, insbesondere um ca. 180°, drehbare Fahrerkabine aufweist. Alternativ wäre auch möglich, die Sitzrichtung des Fahrers der Fahrerkabine in einem Winkel von etwa 90° zur Bewegungsrichtung des Umsetzers anzuordnen. Der Sitz des Fahrers kann dann gegebenenfalls in einem bestimmten Winkelbereich innerhalb der Kabine drehbar sein, damit dieser sich in aktueller Bewegungsrichtung orientieren kann.

Die erfindungsgemäße Vorrichtung kann so ausgebildet sein, dass sie in zwei Arbeitsrichtungen verfahren oder betrieben werden kann. Insbesondere kann dabei das Fahrwerk so ausgebildet sein, dass es in zwei entgegengesetzte Richtungen angetrieben werden kann. Weiter kann eine Umsetzwalze so ausgebildet sein, dass sie in zwei Drehrichtungen funktioniert, indem an der Umsetzwalze befindliche Schaufeln z.B. verlagerbar, z. B. drehbar, sind.

### KURZBESCHREIBUNG DER ZEICHNUNGEN

Die Erfindung wird nachfolgend anhand von Ausführungsbeispielen näher erläutert, welche in den Figuren 1 - 9 dargestellt sind.
- Figur 1 -: zeigt eine mögliche erfindungsgemäße Vorrichtung in perspektivischer Ansicht,
- Figur 2 -: zeigt ebenfalls die erfindungsgemäße Vorrichtung in perspektivischer Ansicht,
- Figur 3 -: zeigt einen Ausschnitt aus der erfindungsgemäßen Vorrichtung im Bereich einer Behandlungszeile in perspektivischer Ansicht,
- Figur 4 -: zeigt eine Seitenansicht auf die in Figur 3 gezeigte Behandlungszeile,
- Figur 5 -: zeigt eine Längsschnittansicht durch die in Figur 3 gezeigte Behandlungszeile,
- Figur 6 -: zeigt einen Querschnitt durch die in Figur 3 gezeigte Behandlungszeile im Bereich der Umsetzwalze gemäß einer ersten erfindungsgemäßen Ausführungsform,
- Figur 7 -: zeigt einen Querschnitt durch die in Figur 3 gezeigte Behandlungszeile im Bereich der Umsetzwalze gemäß einer zweiten erfindungsgemäßen Ausführungsform,
- Figur 8 -: zeigt eine Seitenansicht auf den erfindungsgemäßen Umsetzer in einer Membranaustauschstellung,
- Figur 9 -: zeigt einen Querschnitt durch die in Figur 3 gezeigte Behandlungszeile mit einem Umsetzer in einer weiteren Ausführungsform mit zwei Umsetzwalzen.

### BESTER WEG ZUR AUSFÜHRUNG DER ERFINDUNG

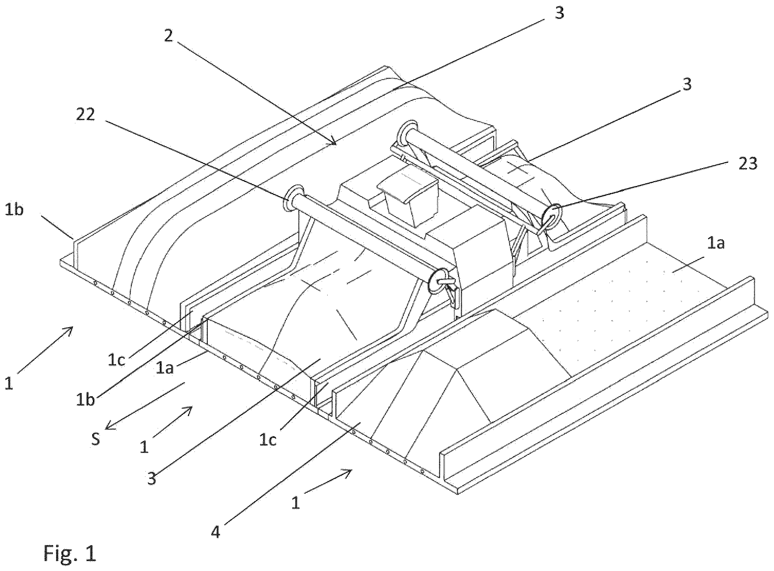

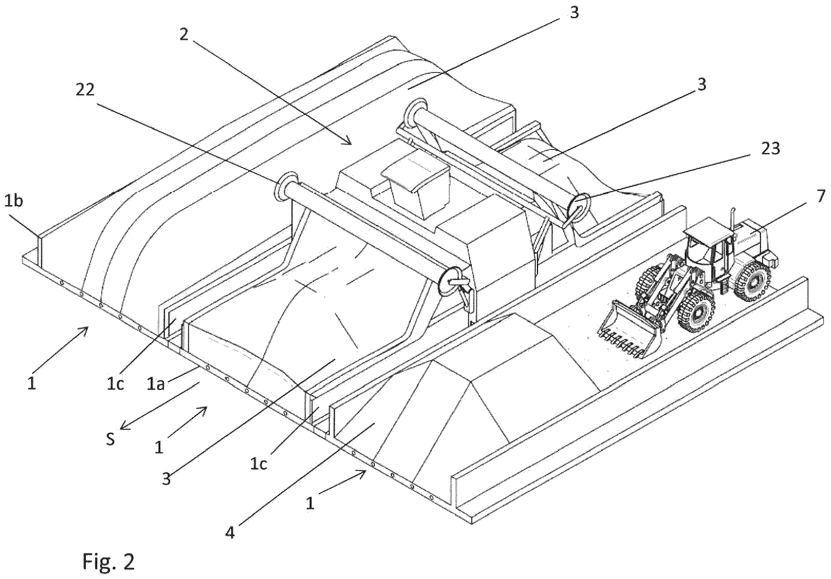

In Figur 1 ist eine erfindungsgemäße Vorrichtung gezeigt. Diese kann ein Teil einer Behandlungsanlage sein. In diesem Fall sind mehrere benachbarte Behandlungszeilen 1 vorgesehen. Jede der Behandlungszeilen kann sich in ihrer Hauptlängserstreckung erstreckende Seitenwände 1b und 1c aufweisen. Die Behandlungszeilen 1 weisen zudem zur aeroben Behandlung von organikhaltigem Material 4 einen entsprechenden Boden 1a auf, welcher sich über Rohre mit Luft beschicken lässt, die dann durch Öffnungen im Boden 1a in das organikhaltige Material 4 einströmen bzw. dieses durchströmen und durch welche Flüssigkeit aufgenommen und abgeleitet werden kann. Die drei abgebildeten Behandlungszeilen 1 zeigen in einem Fall organikhaltiges Material, welches mit einer Membran 3 abgedeckt ist (äußerst linke Zeile 1). In der mittleren Behandlungszeile 1 befindet sich die erfindungsgemäße Umsetzvorrichtung 2, die sich in Bewegungsrichtung S entlang der Längserstreckung der Behandlungszeile 1 bewegen lässt, wobei diese eine - feuchtigkeits- und/oder luftdurchlässigen aber zumindest Geruchsemissionen reduzierende - Membran 3 mittels einer Membranaufnahmevorrichtung 22 beim Umsetzen abhebt und eine weitere Membran 3 gleichen oder anderen Aufbaus mittels einer in Bewegungsrichtung nachlaufenden Membranablageeinrichtung 23 auf dem organikhaltigen Material ablegt. In der äußerst rechten Behandlungszeile 1 ist organikhaltiges Material 4 zu einer Miete aufgeschichtet, welche sich im Entleerungsvorgang oder auch im Beschickungsvorgang befindet. Dies ist in Figur 2 durch den Radlader 7 angedeutet, der entweder frisches Material 4 zu einer Miete aufschichtet oder aber bereits fertig aerob behandeltes Material (z. B. getrocknetes Material oder kompostiertes Material) aus der Behandlungszeile 1 abfährt.

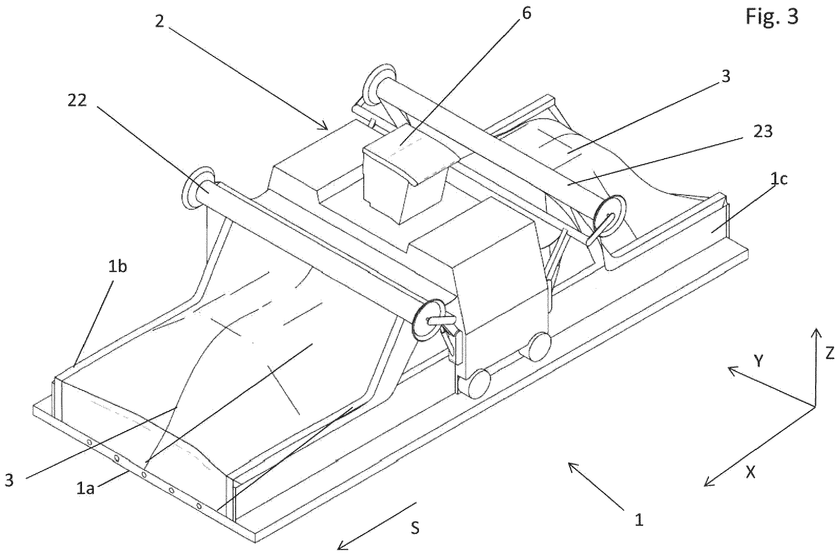

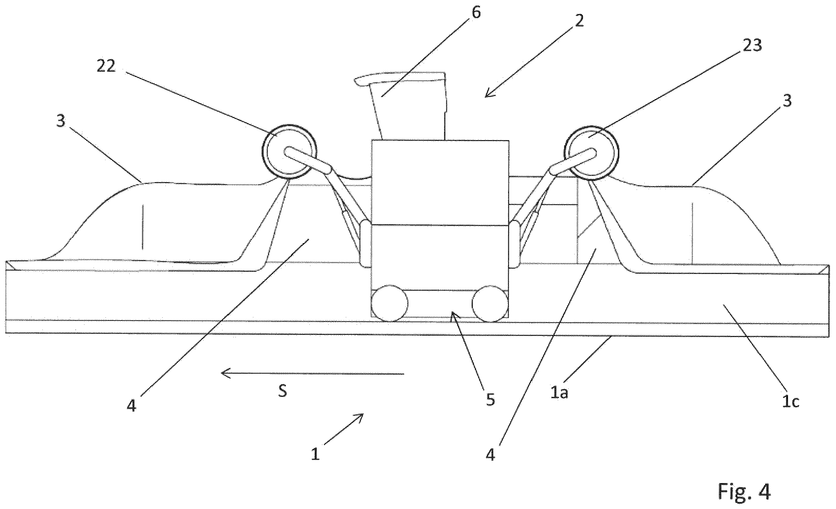

Der erfindungsgemäße Umsetzprozess soll nun anhand der Figuren 3 - 5 etwas näher erläutert werden. Y bezeichnet die Querrichtung der Behandlungszeile 1. Z bezeichnet die vertikaler Richtung senkrecht zum Boden 1a und X bezeichnet die Hauptlängserstreckungsrichtung der Behandlungszeile 1. Wie man in der Figur 3 erkennt, weist die Umsetzvorrichtung 2 in Bewegungsrichtung S, die Bewegung erfolgt dabei in einer Arbeitsrichtung parallel zur Hauptlängserstreckungsrichtung X der Behandlungszeile 1, auf der vorauslaufenden Seite eine Wickelwelle 22 auf, die als Membranaufnahmeeinrichtung funktioniert, indem beim Vorschub der Umsetzvorrichtung 2 in Bewegungsrichtung S eine Membran 3 von dieser Wickelwelle 22 aufgewickelt und von dem darunter befindlichen organikhaltigen Material aufgenommen wird. Auf der in Bewegungsrichtung S nachlaufenden Seite der Umsetzvorrichtung 2 befindet sich eine weitere Wickelwelle 23, die als Membranablageeinrichtung funktioniert, indem beim Umsetzvorgang, d.h. beim Bewegen der Umsetzvorrichtung 2 in Bewegungsrichtung S, die Membran 3 von der Wickelwelle 23 abgewickelt und auf dem organikhaltigen Material abgelegt wird. Bei der Bewegung der Umsetzvorrichtung durch die Behandlungszeile 1 bleibt der weitaus größte Teil des organikhaltigen Materials daher beim gesamten Umsetzungsvorgang unterhalb einer Membran 3 bzw. von dieser abgedeckt.

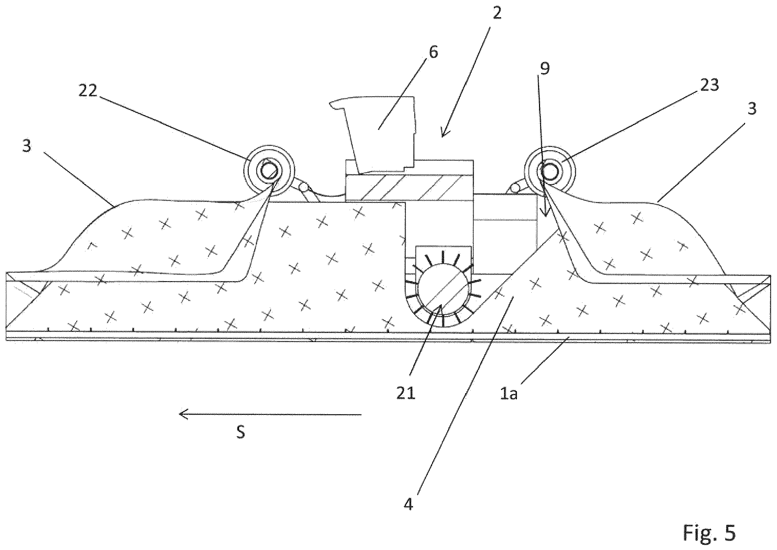

Wie man insbesondere aus der Figur 5 erkennt, bleibt nur ein kleiner Bereich 9 in Bewegungsrichtung S hinter der Umsetzvorrichtung 2 bzw. hinter der Umsetzwalze unabgedeckt. Die freiliegende Fläche des organikhaltigen Materials 4 ist also gegenüber der konventionellen Technik mit Radladern, bei der ein großer Teil der Oberfläche des organikhaltigen Materials beim Umsetzen freilegt, deutlich verringert, so dass die Geruchsemission auch im entsprechenden Maße sinkt.

Auf diese Weise werden die Geruchsemissionen an die Umgebung während des Umsetzens weitgehend reduziert bzw. minimiert. Im gezeigten Beispiel kann die Fahrerkabine 6 der Umsetzvorrichtung 2 im 90°-Winkel zur Bewegungsrichtung S angeordnet sein. Auf diese Weise kann der Fahrer sowohl in Bewegungsrichtung als auch entgegen der Bewegungsrichtung das Arbeitsfeld übersehen. Bei einer bidirektionalen Antriebsweise der Umsetzvorrichtung 2 ist es so auch möglich, in beide Richtungen zu schauen. Alternativ ist es natürlich auch möglich, die Fahrerkabine, insbesondere ca.um 180°, drehbar zu gestalten.

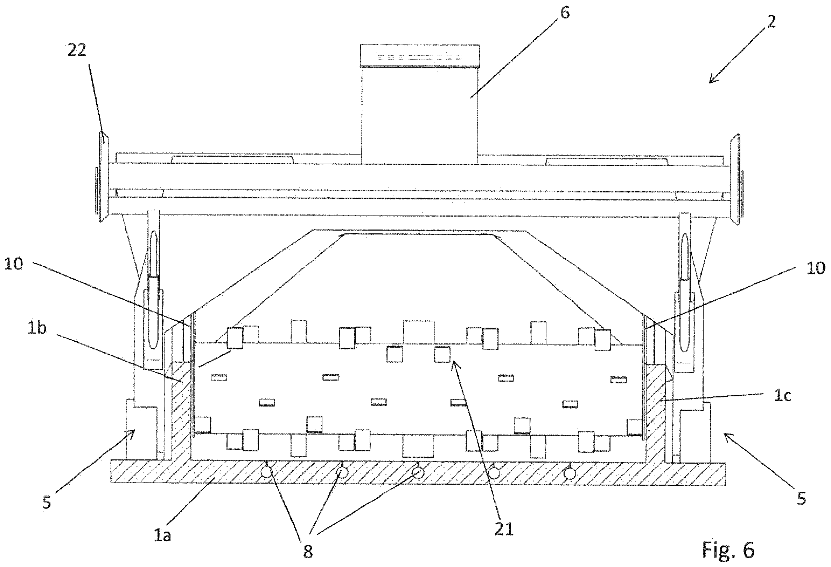

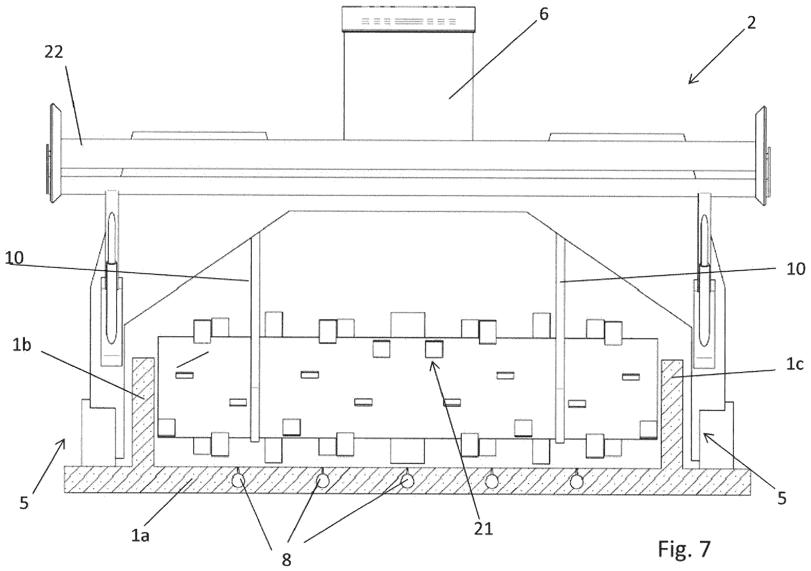

Die Umsetzwalze 21 kann auf verschiedene Art und Weise an der Umsetzvorrichtung 2 angebracht sein, wie es in den beiden Querschnitten der Figuren 6 und 7 gezeigt ist. In Figur 6 befindet sich die Umsetzwalze 21 zwischen den Seitenwänden 1b und 1c der Behandlungszeile 1. Die Umsetzwalze 21 erstreckt sich dabei über den gesamten Innenbereich der Behandlungszeile. Der Boden 1a der Behandlungszeile weist Belüftungsrohre 8 auf, welche kleine Düsenöffnungen aufweist, die in Richtung des Innenraums der Behandlungszeile weisen und durch welche die durch die Rohre 8 strömende Luft in das auf dem Boden 1a abgelegte organikhaltige Material (hier nicht gezeigt) eingeblasen werden und dieses durchströmen kann und durch die Flüssigkeit aufgenommen und abgeleitet werden kann. Im gezeigten Beispiel der Figur 6 ist die Umsetzwalze 21 an ihren Stirnseiten an einem Träger 10 gelagert, welcher mit dem Gestell der Umsetzvorrichtung 2 verbunden ist. Das Fahrwerk 5 der Umsetzvorrichtung 2 befindet sich benachbart zu den jeweiligen Außenseiten der Seitenwände 1b und 1c und wird vom Boden 1a abgetragen, so dass die Umsetzvorrichtung 2 die gesamte Behandlungszeile durchfahren kann, ohne dass das Fahrwerk durch die Behandlungszeile geführt werden muss.

In der Alternative, die in Figur 7 gezeigt ist, sind die Träger 10 der Umsetzwalze 21 nicht an deren Stirnseiten, sondern weiter zur Mitte der Behandlungszeile, bzw. zur Mitte der Umsetzvorrichtung 2, hin angeordnet.

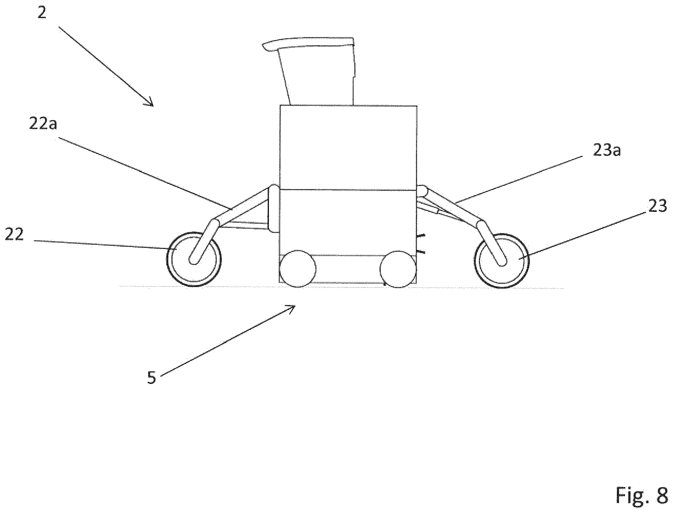

Nach dem Umsetzvorgang ist eine Membran 3 von der Membranablagevorrichtung, d.h. der zugehörigen Wickelwelle 23 abgewickelt. Folglich ist die Wickelwelle 23 dann leer, so dass diese für den nächsten Umsetzvorgang erneut bestückt werden muss. Auf sehr einfache Art und Weise kann die Umsetzvorrichtung 2 daher, wie in Figur 8 gezeigt, vorsehen, dass entsprechende Wickelwellen getauscht werden können. Dazu lassen sich die Wickelwellen 22,23 aus der Arbeitsposition in eine Austauschposition verfahren. Im gezeigten Beispiel sind die Wickelwellen 22,23 an entsprechenden Hebelarmen 22a bzw. 23a angebracht, die sich über einen nicht gezeigten Mechanismus aus der Gebrauchsstellung in die Austauschstellung absenken lassen. In der in Figur 8 gezeigten Stellung hätte die Wickelwelle 22 nach dem Umsetzvorgang eine auf ihr aufgewickelte Membran, die Wickelwelle 23 hingegen weist keine Membran auf. Durch Absenken kann nun die Wickelwelle 22 am Arm 23a und die Wickelwelle 23 entsprechend am Arm 22a angebracht werden. Auf diese Weise wird also die Membran "getauscht".

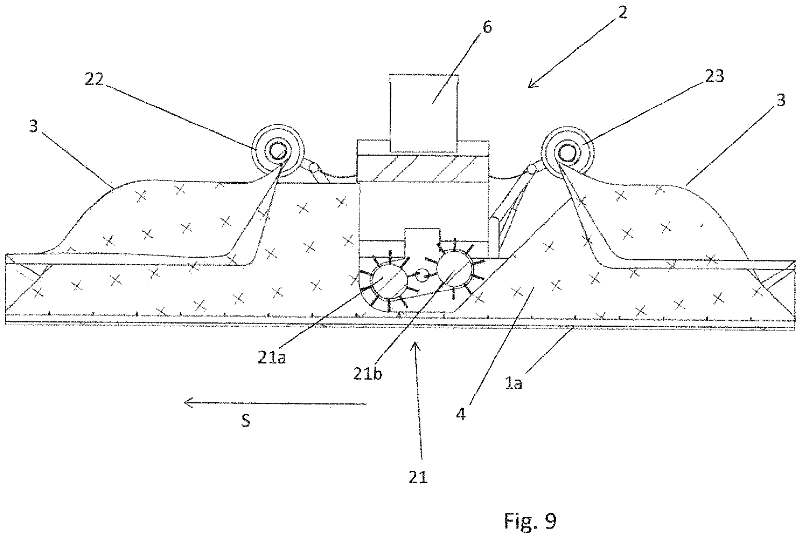

Die genannte Vorgehensweise eignet sich für Umsetzvorrichtungen2, die lediglich in einer Arbeitsrichtung arbeiten können. In einer alternativen Ausführungsform gemäß Figur 9 ist eine bidirektionale Umsetzvorrichtung gezeigt. Im Unterschied zu der bisher erläuterten Umsetzvorrichtung 2 weist diese zwei Umsetzwalzen 21a und 21b auf.

Beim Umsetzen in Richtung S wird die Umsetzwalze 21a verwendet, die Umsetzwalze 21b wird dazu ein Stück angehoben, so dass sie nicht in Kontakt mit dem Boden 1a der Behandlungszeile 1 kommt. Ist der Umsetzvorgang in Richtung S beendet, so kann ein weiterer Umsetzvorgang in entgegengesetzter Richtung erfolgen, indem die Umsetzwalze 21b heruntergefahren und die Umsetzwalze 21a hochgefahren wird. Auf diese Weise ist ein Tausch der Wickelwellen (vergleiche Figur 8) nicht mehr erforderlich. Das Hoch- und Runterfahren der Umsetzwalzen 21a und einen 21b kann konstruktiv auf unterschiedliche Art und Weise gelöst werden. Jede Walze kann an einer eigenen linear nach oben und nach unten in vertikaler Richtung verstellbaren Aufhängung gelagert sein. Alternativ besteht zum Beispiel die Möglichkeit, dass beide Umsetzwalzen 21a und 21b an einer Schwinge gelagert werden, deren Verdrehung um eine senkrecht zur Zeichenebene verlaufende Schwenkachse dazu führt, dass die eine Umsetzwalze angehoben und die andere abgesenkt wird.

## Patentansprüche

1. Aerobes Verfahren zum Behandeln von organikhaltigem Material, bei welchem folgende Schritte ausgeführt werden:
a. Beschicken einer Behandlungszeile (1) mit zu behandelndem organikhaltigem Material;
b. Abdecken des zu behandelnden organikhaltigen Materials mit einer feuchtigkeits- und/oder luftdurchlässigen aber zumindest Geruchsemissionen reduzierenden ersten Membran;
c. aerobes Behandeln des organikhaltigen Materials durch aktives Zuführen von Luft in das organikhaltige Material und Durchströmen desselben mit der zugeführten Luft;
d. Umsetzen des organikhaltigen Materials mittels einer Umsetzvorrichtung (2), wobei das organikhaltige Material homogenisiert und/oder durchmischt wird, wobei ggf. das aktives Zuführen von Luft in das organikhaltige Material während des Umsetzvorgangs unterbrochen und/oder reduziert wird.
e. Fortsetzen des Zuführens von Luft gemäß Schritt c, **dadurch gekennzeichnet,**
**dass** zum Umsetzen eine Umsetzvorrichtung (2) eingesetzt wird, welche entlang der Längserstreckungsrichtung (X) der Behandlungszeile (1) bewegt wird und dabei das organikhaltige Material mittels einer Umsetzwalze (21) umsetzt, wobei die Umsetzvorrichtung (2) eine Membranaufnahmeeinrichtung (22) aufweist, welche die das organikhaltige Material abdeckende erste Membran während des Umsetzens aufnimmt und wobei die Umsetzvorrichtung (2) eine Membranablegeeinrichtung (23) aufweist, die eine feuchtigkeits- und/oder luftdurchlässige aber zumindest Geruchsemissionen reduzierende zweite Membran auf dem umgesetzten organikhaltigen Material ablegt.

2. Verfahren nach Anspruch 1,
bei welchem die erste Membran durch die an der Umsetzvorrichtung (2) durch die an der in Bewegungsrichtung (S) vorauseilenden Seite angeordnete Membranaufnahmeeinrichtung (22) während des Umsetzens aufgewickelt wird.

3. Verfahren nach Anspruch 1 oder 2,
bei welchem die zweite Membran durch die an der Umsetzvorrichtung (2) durch die an der in Bewegungsrichtung (S) nachlaufenden Seite angeordnete Membranablegeeinrichtung (23) während des Umsetzens abgewickelt wird.

4. Verfahren nach einem der vorigen Ansprüche,
**dadurch gekennzeichnet,**
**dass** es sich um ein Verfahren handelt, bei welchem das organikhaltige Material aerob getrocknet und/oder kompostiert wird, hygienisiert und/oder aerobisiert wird und/oder Stoffe, insbesondere Schadstoffe, mikrobiologisch umgewandelt und/oder abgebaut werden.

5. Verfahren nach einem der vorigen Ansprüche,
**dadurch gekennzeichnet,**
**dass** während des Schrittes b. ein Umsetzen des organikhaltigen Materials mittels der Umsetzvorrichtung (2) ausgeführt wird.

6. Verfahren nach einem der vorigen Ansprüche,
**dadurch gekennzeichnet,**
**dass** nach Beendigung des aeroben Behandlungsvorgangs ein weiteres Umsetzen des organikhaltigen Materials mittels der Umsetzvorrichtung (2) erfolgt, bei welchem die auf dem organikhaltigen Material liegende Membran von der Membranaufnahmeeinrichtung (22) aufgenommen wird.

7. Vorrichtung zum Behandeln von organikhaltigem Material, insbesonderezur Durchführung eines Verfahrens nach einem der vorigen Ansprüche, aufweisend wenigstens eine Umsetzvorrichtung (2) mit einer Umsetzwalze (21) und einer Membranaufnahmeeinrichtung (22) an einer ersten Seite der Umsetzvorrichtung (2) und einer Membranablegeeinrichtung (23) an einer der ersten Seite gegenüberliegenden zweiten Seite der Umsetzvorrichtung (2), welche eine feuchtigkeits- und/oder luftdurchlässige aber zumindest Geruchsemissionen reduzierende zweite Membran und/oder erste Membran aufweist.

8. Vorrichtung nach Anspruch 7,
**dadurch gekennzeichnet,**
**dass** sie wenigstens eine Behandlungszeile (1) mit einem Ablageboden (1a) zum Ablegen von organikhaltigem Material umfasst, wobei die Behandlungszeile (1) weiter eine, bevorzugt im Ablageboden (1a) angeordnete, Belüftungseinrichtung (8) umfasst, die auf dem Ablageboden (1a) abgelegtes organikhaltiges Material belüften kann.

9. Vorrichtung nach einem der vorigen Ansprüche,
**dadurch gekennzeichnet,**
**dass** die Behandlungszeile (1) wenigstens zwei beabstandete, sich in der Hauptlängserstreckung (X) der Behandlungszeile (1) erstreckende Seitenwände (1b, 1c) aufweist.

10. Vorrichtung nach Anspruch 9,
**dadurch gekennzeichnet,**
**dass** die Umsetzwalze (21) der Umsetzvorrichtung (2) zwischen den Seitenwänden (1b, 1c) angeordnet ist.

11. Vorrichtung nach Anspruch 9 oder 10,
**dadurch gekennzeichnet,**
**dass** die Umsetzvorrichtung (2) ein Fahrwerk (5) aufweist, welches die Umsetzvorrichtung (2) in einer Bewegungsrichtung (S) parallel zu den Seitenwänden (1b, 1c) bewegen kann und welches im Bereich der jeweiligen Außenseiten der Seitenwände (1b, 1c), insbesondere benachbart zu den Außenseiten, angeordnet ist.

12. Vorrichtung nach einem der Ansprüche 8 bis 11,
**dadurch gekennzeichnet,**
**dass** sie zwei in Bewegungsrichtung (S) hintereinander angeordnete Umsetzwalzen (21a, 21b) aufweist, wobei die beiden Umsetzwalzen (21a, 21b) abgesenkt und hochgefahren werden können.

13. Vorrichtung nach einem der Ansprüche 8 bis 12,
**dadurch gekennzeichnet,**
**dass** die Umsetzvorrichtung eine drehbare Fahrerkabine aufweist.

14. Vorrichtung nach einem der Ansprüche 8 bis 13,
**dadurch gekennzeichnet,**
**dass** sie in zwei Arbeitsrichtungen verfahren oder betrieben werden kann.

## Claims

1. Aerobic process for treating organic material in which the following steps are carried out:
a. Loading a processing line (1) with organic material which is to be treated;
b. Covering the organic material, which is to be treated, with a moisture-permeable and/or air-permeable but at least odour-reducing first membrane;
c. Aerobically treating the organic material by actively supplying air into the organic material and passing the supplied air through the material;
d. Turning over the organic material by means of a turning device (2) wherein the organic material is homogenized and/or mixed up wherein where applicable the active supply of air into the organic material is stopped and/or reduced during the turning process;
e. Continuing the supply of air according to step c **characterised in that**
a turning device (2) is used for turning which is moved along the longitudinal extension direction (X) of the processing line (1) and thereby turns over the organic material by means of a turning roller (21), wherein the turning device (2) has a membrane receiving device (22) which during turning receives the first membrane covering the organic material and wherein the turning device (2) has a membrane laying device (23) which lays down onto the turned organic material a moisture-permeable and/or air-permeable but at least odour-reducing second membrane.

2. Method according to claim 1
in which the first membrane is wound up during the turning process by the membrane receiving device (22) which is arranged on the leading side on the turning device (2) in the direction of movement (S).

3. Method according to claim 1 or 2
in which the second membrane is unwound during the turning process by the membrane laying device (23) which is arranged on the trailing side on the turning device (2) in the direction of movement (S).

4. Method according to one of the preceding claims
**characterised in that**
it is a process in which the organic material is aerobically dried and/or composted, sanitized and/or aerobicized and/or in which substances, in particular noxious substances, are converted and/or decomposed microbiologically.

5. Method according to one of the preceding claims,
**characterised in that**
during step b. the organic material is turned over by means of the turning device (2).

6. Method according to one of the preceding claims
**characterised in that**
at the end of the aerobic treatment process a further turning of the organic material is carried out by means of the turning device (2) wherein the membrane lying on the organic material is received by the membrane receiving device (22).

7. Device for treating organic material, in particular for carrying out the process according to the previous claims, having at least one turning device (2) with a turning roller (21) and a membrane receiving device (22) on a first side of the turning device (2), and
a membrane laying device (23) on a second side of the turning device (2) opposite the first side, which has a moisture-permeable and/or air-permeable but at least odour-reducing second membrane and/or first membrane.

8. Device according to claim 7
**characterised in that**
it comprises at least one processing line (1) having a shelf base (1a) for depositing organic material wherein the processing line (1) further comprises one ventilating device (8), preferably arranged in the shelf base (la), which can aerate the organic material which is deposited on the shelf base (1a).

9. Device according to one of the preceding claims
**characterised in that**
the processing line (1) has at least two spaced side walls (1b, 1c) which extend in the main longitudinal extent (X) of the processing line (1).

10. Device according to claim 9
**characterised in that**
the turning roller (21) of the turning device (2) is situated between the side walls (1b, 1c).

11. Device according to claim 9 or 10
**characterised in that**
the turning device (2) has a drive chassis (5) which can move the turning device (2) in a moving direction (S) parallel to the side walls (1b, 1c) and which is situated in the region of the respective outer sides of the side walls (1b, 1c), in particular adjacent to the outer sides.

12. Device according to one of claims 8 to 11
**characterised in that**
it has two turning rollers (21a, 21b) arranged in succession in the direction of movement (S), wherein the two turning rollers (21a, 21b) can be lowered and raised.

13. Device according to one of claims 8 to 12
**characterised in that**
the turning device has a rotatable driver cab.

14. Device according to one of claims 8 to 13
**characterised in that**
it can be moved or operated in two working directions.

## Revendications

1. Procédé aérobie pour le traitement de matériau contenant des substances organiques, dans lequel les étapes suivantes sont effectuées:
a. Remplissage d'une ligne de traitement (1) avec un matériau contenant des substances organiques,
b. recouvrement du matériau contenant des substances organiques devant être traité avec une première membrane, perméable à l'humidité et / ou à l'air, mais au moins réduisant les émissions d'odeurs,
c. traitement aérobie du matériau contenant des substances organiques par admission active d'air dans le matériau contenant des substances organiques et passage à travers celui-ci de l'air admis,
d. déplacement du matériau contenant des substances organiques au moyen d'un dispositif de déplacement (2), sachant que le matériau contenant des substances organiques est homogénéisé et / ou mélangé, sachant que, le cas échéant, l'admission active d'air dans le matériau contenant des substances organiques est interrompue et/ ou réduite pendant le processus de déplacement,
e. poursuite de l'admission d'air selon l'étape c., **caractérisé en ce que**,
pour le déplacement, un dispositif de déplacement (2) est mis en œuvre, lequel est mû le long du sens de la longueur (X) de la ligne de traitement (1) et, ce faisant, déplacement le matériau contenant des substances organiques au moyen d'un rouleau de déplacement (21), sachant que le dispositif de déplacement (2) présente un dispositif de réception de membrane (22), qui, pendant le déplacement, reçoit la première membrane recouvrant le matériau contenant des substances organiques, et sachant que le dispositif de déplacement (2) présente un dispositif de dépôt de membrane (23), qui dépose sur le matériau contenant des substances organiques transféré une deuxième membrane perméable à l'humidité et / ou à l'air, mais réduisant au moins les émissions d'odeurs.

2. Procédé selon la revendication 1,
dans lequel, pendant le déplacement, la première membrane est enroulée par le dispositif de réception de membrane (22), qui, équipant le dispositif de déplacement (2), est disposé sur le côté avant dans la direction de déplacement (S).

3. Procédé selon revendication 1 ou 2,
dans lequel, pendant le déplacement, la deuxième membrane est déroulée par le dispositif de dépôt de membrane (23), qui, équipant le dispositif de déplacement (2), est disposé sur le côté arrière dans la direction de déplacement (S).

4. Procédé selon l'une des revendications précédentes,
**caractérisé en ce**
**qu'**il s'agit d'un procédé dans lequel le matériau contenant des substances organiques est soumis à un séchage par voie aérobie et / ou composté, hygiénisé et / ou dégradé par voie aérobie et / ou que des matières, en particulier les matières polluantes, sont biologiquement transformées et / ou dégradées.

5. Procédé selon l'une des revendications précédentes,
**caractérisé en ce que**,
pendant l'étape b., un déplacement du matériau contenant des substances organiques est effectué au moyen du dispositif de déplacement (2)

6. Procédé selon l'une des revendications précédentes,
**caractérisé en ce que**,
après la fin du processus de traitement aérobie, est effectué au moyen du dispositif de déplacement (2) un autre déplacement du matériau contenant des substances organiques, lors duquel la membrane posée sur le matériau contenant des substances organiques est prise en charge par le dispositif de réception de membrane (22).

7. Dispositif pour le traitement de matériau contenant des substances organiques, en particulier pour l'exécution d'un procédé selon l'une des revendications précédentes, présentant au moins un dispositif de déplacement (2) avec un rouleau de déplacement (21) et un dispositif de réception de membrane (22) sur un premier côté du dispositif de déplacement (2), et un dispositif de dépôt de membrane (23) sur un deuxième côté du dispositif de déplacement (2), disposé à l'opposé du premier côté, lequel présente une deuxième et / ou une première membrane, perméable à l'humidité et / ou à l'air, mais réduisant au moins les émissions d'odeurs.

8. Dispositif selon la revendication 7,
**caractérisé en ce qu'**
il comprend au moins une ligne de traitement (1) avec une base de dépôt (1a) pour le dépôt de matériau contenant des substances organiques, sachant que la ligne de traitement (1) comprend en outre une installation d'aération (8), qui, disposée de préférence dans la base de dépôt (la), peut ventiler le matériau comprenant des substances organiques qui est posé sur la base de dépôt (1a).

9. Dispositif selon l'une des revendications précédentes,
**caractérisé en ce que**
la ligne de traitement (1) présente au moins deux parois latérales (1b, 1c) distancées, qui s'étendent dans le principal sens longitudinal (X) de la ligne de traitement (1).

10. Dispositif selon la revendication 9,
**caractérisé en ce que**
le rouleau de déplacement (21) du dispositif de déplacement (2) est disposé entre les parois latérales (1b, 1c).

11. Dispositif selon revendication 9 ou 10,
**caractérisé en ce que**
le dispositif de déplacement (2) présente un train de roulement (5), qui peut déplacer le dispositif de déplacement (2) dans une direction de déplacement (S), parallèlement aux parois latérales (1b, 1c), et qui est disposé dans une partie des côtés extérieurs respectif des parois latérales (1b, 1c), en particulier voisines des côtés extérieurs.

12. Dispositif selon l'une des revendications 8 à 11,
**caractérisé en ce**
**qu'**il présente deux rouleaux de déplacement (21a, 21b) disposés dans la direction de déplacement (S), sachant que les rouleaux de déplacement (21a, 21b) peuvent être conduits en abaissement et en élévation.

13. Dispositif selon l'une des revendications 8 à 12,
**caractérisé en ce que**
le dispositif de déplacement présente une cabine de conducteur.

14. Dispositif selon l'une des revendications 8 à 13,
**caractérisé en ce qu'**
il peut être conduit ou exploité dans deux directions de travail.
